# EUROPEAN PATENT SPECIFICATION

(11) **EP 3 204 814 B1**
(45) Date of publication and mention of the grant of the patent: **09.12.2020**
(21) Application number: 14786635.4
(22) Date of filing: 06.10.2014
(51) Int. Cl.: G02B 21/26

(54) **MICROSCOPE HAVING A STAGE WHICH IS MOVABLE MANUALLY OR MOTORIZED**
MIKROSKOP MIT MANUELL BEWEGLICHEM ODER MOTORISIERTEM TISCH
MICROSCOPE AYANT UNE PLATINE QUI EST MOBILE MANUELLEMENT OU MOTORISÉE

(43) Date of publication of application: 16.08.2017
(73) Proprietor: Leica Instruments (Singapore) Pte. Ltd., 608924 Singapore (SG); Leica Microsystems (Schweiz) AG, 9435 Heerbrugg (CH)
(72) Inventor: SEE, Seng, Ho, Singapore 641674 (SG)
(74) Representative: Schaumburg und Partner Patentanwälte mbB
(86) International application number: PCT/EP2014/071350
(87) International publication number: WO 2016/055089

(56) References cited:
- FR-A- 1 316 033
- GB-A- 2 119 955
- JP-A- 2004 226 882
- US-A- 4 653 878

## Description

The invention relates to a microscope comprising a movable stage on which the objects to be microscoped are placed. For moving the stage, an adjusting unit is provided by means of which the stage is movable relative to the base of the microscope so that the distance between the stage and the base is increased. By moving the stage, in particular a focusing on the object is achieved. This adjusting unit comprises a drive shaft, the distance between the stage and the base being adjustable by rotation of the drive shaft.

Standard microscopes have height-adjustable stages so that a focusing on objects which are to be microscoped and placed on the stages can be carried out. On the one hand, microscopes are known in which the stage height is adjusted manually by means of appropriate focusing knobs. This has the advantage that no electricity is required for the adjustment, and the user is given direct feedback during adjustment. What is disadvantageous, however, is that a precise, in particular repeatable, adjustment of a position is quite difficult and requires a great deal of sensitivity from the user.

On the other hand, microscopes are known in which the stage is adjusted motorized by means of an electric motor. In this way, desired positions can be adjusted very precisely and repeatably. Such microscopes, however, have the disadvantage that the user is not given any direct feedback and that the microscopes require a power supply, are expensive and have a complex structure.

From document DE 87 15 891 U1, a microscope is known, the stage of which is adjustable by means of an electric motor. The desired adjustment is controlled via a knob, the rotary movement of which is detected by appropriate sensors and correspondingly implemented by the motor. An axial movement of the knob allows a switching between a fine drive and a coarse drive.

This microscope, however, has the disadvantage that a large number of components are moved, as a result whereof inaccuracies occur and the microscope is more error-prone. In addition, the microscope has a complex structure and is thus cost-intensive. Moreover, operating one of the switch knobs has the effect of triggering only one signal, either for the coarse drive or the fine drive. It is not possible to perform a sensitive focus setting by a corresponding rotary movement of the switch knob.

The Document US 4,653,878 discloses a microscope. The microscope of comprises a movable stage arranged in a movable portion guide, which can be moved by a rotary shaft via a rack and pinion mechanism. The rotary shaft can be driven by a knob fixedly attached to the rotary shaft or by a step motor coupled to the rotary shaft by an electromagnetic clutch. The electromagnetic clutch may be disengaged in order to move the rotary shaft independently of the step motor.

The Document GB 2 119 955 A discloses a focusing means for a microscope. The focusing means comprise an object table mounted on a carrier. The carrier can be moved by a motor relative to a guide plate. The guide plate itself can be manually moved relative to the microscope via a toothed gear and associated rack. This arrangement allows for the manual movement and the movement driven by a motor to occur at the same time independent of each other.

The Document JP 2004 226882 A discloses a microscope, comprising an objective lens 5 and an immovable stage. Only the objective lens 5 is moved with respect to the stage 3.

It is the object of the invention to specify a microscope which has a simple structure and allows a precise focusing on the object to be examined under the microscope.

This object is solved by a microscope having the features of claim 1. Advantageous developments of the invention are specified in the dependent claims.

According to the invention the adjusting unit for adjusting the stage is drivable, on the one hand, by a manually operable operating unit and, on the other hand, by an electric drive unit. The manual operating unit has a first output shaft which is correspondingly driven by the operating unit. The electric drive unit has a second output shaft which is correspondingly electrically driven. In a manual operating mode, the first output shaft of the operating unit is coupled to the drive shaft of the adjusting unit via a first coupling unit so that when the operating unit is operated manually the adjusting unit is driven by the operating unit and thus the stage is moved relative to the base. In a motorized operating mode, on the other hand, the second output shaft of the electric drive unit is coupled to the drive shaft of the adjusting unit via a second coupling unit so that in this motorized operating mode the adjusting unit is driven by the electric drive unit. In the manual operating mode the drive shaft is not coupled to the second output shaft via the second coupling unit and in the motorized operating mode the drive shaft is not coupled to the first output shaft via the first coupling unit. Thus, in the manual operating mode the drive shaft is exclusively coupled to the first output shaft and in the motorized operating mode the drive shaft is exclusively coupled to the second output shaft. As a result, an optional switching between a manual adjustment of the stage and a motorized adjustment of the stage is made possible.

By operating the microscope in the manual operating mode a quick, intuitive sample positioning in the focal plane is achieved. Further, in this manual operating mode it is not necessary to connect the microscope to a power supply.

Compared thereto, the use of the motorized operating mode has the advantage that an accurate and repeatable focusing operation, an automated focusing, z-stacking and further automated functionalities can be implemented. Thus, the contrary requirements for speed (manual operating mode) and precision (motorized operating mode) are balanced. The electric drive unit in particular comprises an electric motor and/or a gear box. The manual operating unit is in particular designed and coupled to the adjusting unit in the manual operating mode such that the stage height is adjusted purely mechanically in that an all-mechanical coupling is realized. In particular, no rotary movement of the operating element is detected by an encoder and transferred to an electric drive unit which then implements this detected movement. In a preferred embodiment of the invention the first coupling unit and/or the second coupling unit are each designed as electromagnetic clutches. The use of electromagnetic clutches has a number of advantages: on the one hand, such electromagnetic clutches have a compact structure, are less error-prone, fully developed and can be purchased cost-efficiently. In addition, in the non- activated state of such electromagnetic clutches, the output shaft is fully decoupled from the drive shaft so that, when switching between the operating modes, the position of the stage is not changed and the stage always remains reliably in the previously set position. Furthermore, the use of electromagnetic clutches ensures zero residual torque in any mounting position and zero backlash during torque transmission aided by the contactless gap between the clutch plates and the drive shaft and output shaft. Furthermore, electromagnetic clutches require only little maintenance. In addition, due to the electromagnetic clutches a limitation of the maximum transmittable torque is achieved since in the event when the torque predetermined by the corresponding frictions of the electromagnetic clutches is exceeded the clutch slips and thus a transmission of higher torques is not possible. In this way, the components are protected. In particular, the electromagnetic clutches are designed such that the maximum transmittable torque is chosen such that damages to the adjusting unit are reliably prevented.

The first coupling unit and/or the second coupling unit are in particular electromagnetic friction-plate clutches. Such friction-plate clutches have a particularly simple structure and are not very prone to errors.

Each of the first and the second coupling unit in particular has two friction plates, one of which is fixed to the respective output shaft and the other one is fixed to the drive shaft. By activating the respective coupling unit, a magnet of this coupling unit creates a magnetic field by which the two friction plates are pressed together so that when the output shaft rotates a force is transmitted as a result of the friction between the friction plates and the drive shaft is driven as well.

Alternatively, the electromagnetic clutches may also be multiple disc clutches, electromagnetic tooth clutches, electromagnetic particle clutches and/or hysteresis powered clutches. The first and the second coupling units are in particular identically designed. Alternatively, also different coupling units may be used.

In particular, each coupling unit is designed such that is has an activated and a deactivated mode, wherein in the activated mode the coupling between the respective output shaft and the drive shaft is established, and in the deactivated mode there is no coupling between the respective output shaft and the drive shaft.

The activated mode is in particular that one mode in which electric current is applied to the coupling unit, whereas no electric current is applied to the coupling unit in the deactivated mode. Thus, switching between the two operating modes is simply achieved by a corresponding activation or deactivation of the two coupling units.

In the manual operating mode, in particular only the first coupling unit of the coupling units is energized, and only the second coupling unit of the coupling units is energized in the motorized operating mode.

In a particularly preferred embodiment, the operating unit has at least one knob for rotating the first output shaft. When this knob is rotated manually, the first output shaft rotates and, provided that the manual operating mode is switched on, the drive shaft of the adjusting unit rotates as well. Thus, in a particularly easy manner the adjustment of the stage is made possible purely mechanically and purely manually. In addition, the user is given a direct feedback on the adjustment and thus can operate the microscope intuitively.

It is particularly advantageous when the operating unit comprises a first knob and a second knob, the first knob being used for a coarse adjustment of the stage and the second knob being used for a fine adjustment of the stage. Coarse adjustment in particular means that when the first knob is rotated by a predetermined angle, the stage is moved by a noticeably longer distance as compared to the same rotation of the second knob for fine adjustment. Thus, the first knob is used for a quick adjustment to find the object, in particular to find the approximate focal plane so that a quick adjustment of the approximate focal plane is possible. The subsequent use of the second knob for fine adjustment enables a precise adjustment of the focus.

The drive shaft is in particular designed as a pinion shaft, as a result whereof a particularly simple and stable structure is achieved.

In a preferred embodiment, the drive shaft forms part of a stationary unit of the adjusting unit, wherein this stationary unit is not moved relative to the base of the microscope. Further, the adjusting unit comprises a rack and pinion mechanism which is drivable by the drive shaft and by means of which the stage can be moved relative to the stationary unit for a respective height-adjustment of the stage and thus for focusing on the object.

In a particularly preferred embodiment of the invention, the microscope has a sensor unit for determining the position of the stage. Thus, the position of the stage is known at any time, which is important for autofocusing or for restoring a predetermined position.

This sensor unit is in particular designed such that it works independently both of the operating unit and the motor so that it is irrelevant in which operating mode the microscope is currently operated. In particular, it is thus achieved that, for example, in the case of the motorized operating mode and a corresponding decoupling of the operating unit from the drive shaft, even if the user operates the operating element, the sensor signal is not distorted by this operation of the operating element. For this, the sensor unit is in particular designed such that it determines neither the position of components of the operating unit nor the position of components of the motor, and in particular forms itself no part of the operating unit or the motor either.

It is particularly advantageous when the sensor unit has a first sensor element and a second sensor element, the first sensor element being moved together with the stage, for which it is in particular arranged at components that are firmly coupled to the stage and which are correspondingly moved together therewith by means of the adjusting unit. The second sensor element, on the other hand, forms part of the stationary unit of the adjusting unit and is thus not moved when the adjusting unit is driven. Based on the position of the first and of the second sensor element relative to each other, the sensor unit determines the position of the stage since the movement of the two sensor elements relative to each other also corresponds to the movement of the stage.

The sensor unit is in particular designed as an encoder. The encoding system and the drive mechanism of the adjusting unit are in particular on the same focus axis with one single position measurement system which can operate independently of the manual operating unit and the motor when the corresponding clutches are not engaged.

It is particularly advantageous when the microscope comprises a switching unit for switching between the manual and the motorized operating mode, this switching unit in particular being designed such that, optionally, always only either the first coupling unit or the second coupling unit is activated so that at a time the drive shaft is only coupled either to the first or the second output shaft. Thus, it is in particular prevented that a simultaneous coupling of the drive shaft with both output shafts takes place. As a result, it is in turn achieved that it cannot happen that the user manually rotates the operating unit with such a high torque that the motor could be damaged. Further, it is thus prevented that in the motorized operating mode the knobs of the operating unit are rotated, which might irritate the user.

In a particularly preferred embodiment, further a self-locking mode for holding the object in a predetermined position is provided. In this self-locking mode, the stage is connected via the drive shaft and via the first coupling unit to the manual operating unit and/or via the activated second coupling unit to the motor. An unintentional adjustment of the stage, for example when exerting a force thereon, is thus prevented.

Further features and advantages of the invention result from the following description which explains the invention in more detail on the basis of embodiments in connection with the enclosed figures.
Figure 1 is a schematic perspective illustration of a microscope.
Figure 2 is a schematic perspective illustration of an adjusting mechanism for height-adjustment of a stage of a microscope according to Figure 1.
Figure 3 is a schematic perspective illustration of an adjusting mechanism according to Figure 2, with the housing parts being removed.
Figure 4 is a further schematic perspective illustration of a part of the adjusting mechanism according to Figures 2 and 3.
Figure 5 is a sectional view of the adjusting mechanism according to Figures 2 to 4.
Figure 6 is a top view of the adjusting mechanism according to Figures 2 to 5.
Figure 7 is a further top view of the adjusting mechanism according to Figures 2 to 6, with the clutches being removed.
Figure 8 is a schematic perspective illustration of a detail of the adjusting mechanism according to Figures 2 to 7.

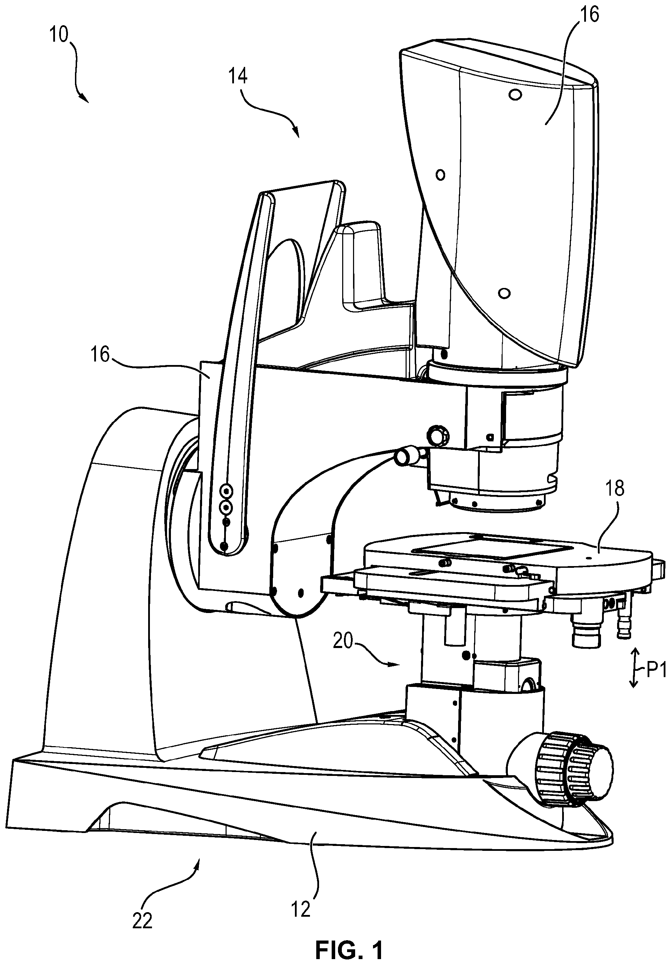

In Figure 1, a schematic perspective illustration of a digital microscope 10 is shown. The microscope 10 comprises a stationary stand base body 12 by means of which the microscope 10 can be set up on a surface. Further, the microscope 10 has a pivot unit 14 which is pivotable relative to the stand base body 12. The pivot unit 14 comprises at least one image capturing unit by means of which an image of the object to be microscoped can be captured. In particular, by means of the image capturing unit not only single images can be captured but also videos. These videos make it possible to view the object to be microscoped from different angle of views.

Further, the pivot unit 14 has an objective system or zoom system by means of which different magnifications of the object to be microscoped can be set.

The objective system in particular comprises a large number of objectives, one of which being optionally pivoted into the beam path of the microscope.

The image capturing unit, in particular a camera, and the objective system are not visible in Figure 1 as they are covered by a housing 16 of the pivot unit 14.

The objectives of the objective system are in particular parfocal objectives so that when changing the objectives no refocusing by the user is necessary. The objectives are in particular adjusted to the distance between the axis of rotation, about which the pivot unit is rotated, and the interface of the objectives, i.e. the area in which the objective currently in use is arranged so that there results an eucentric system, as a result of which no refocusing is required when the pivot unit 14 is pivoted relative to the stand base body 12.

Further a stage 18 on which the objects to be microscoped are placed is mounted to the stand base body 12. This stage 18 can be height-adjusted by means of an adjusting mechanism 20, i.e. the distance between the stage 18 and the base 22 of the microscope 10 can be varied. By means of this height-adjustment of the stage 18 a focusing on the objects to be microscoped is achieved so that these can be viewed in a sharply focused manner. The stage 18 is in particular adjusted linearly in the direction of the double arrow P1.

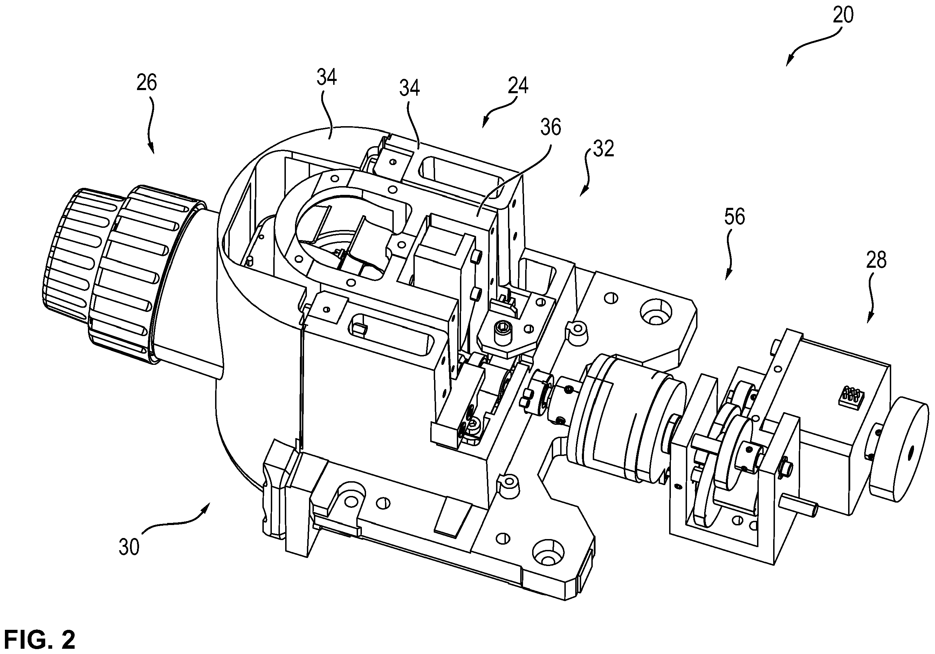

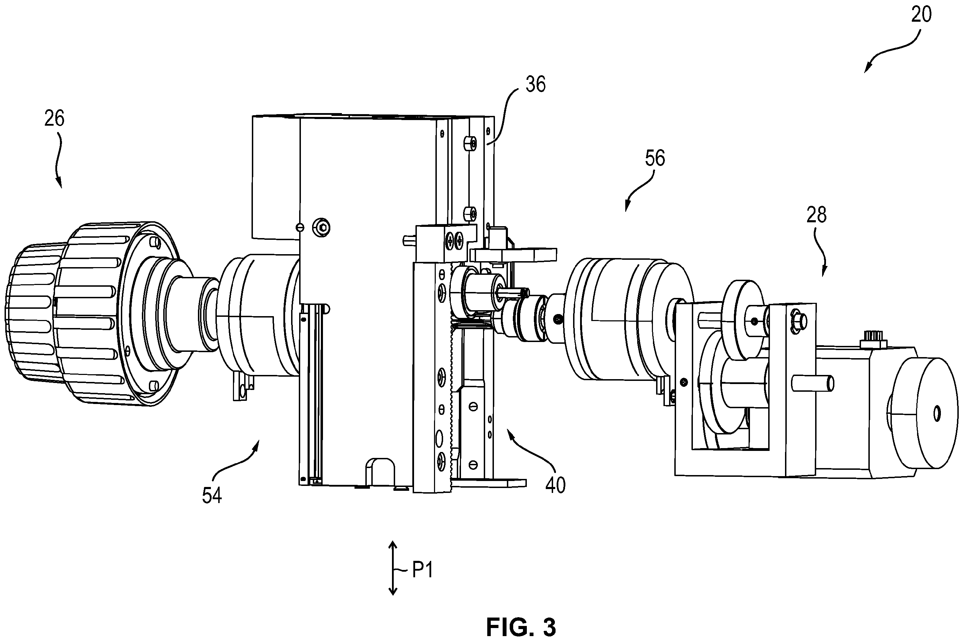

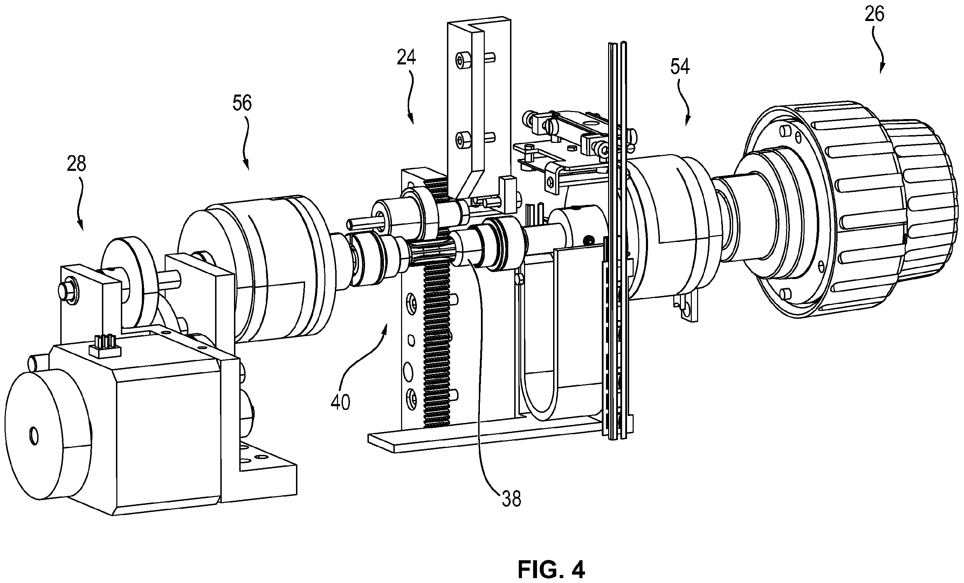

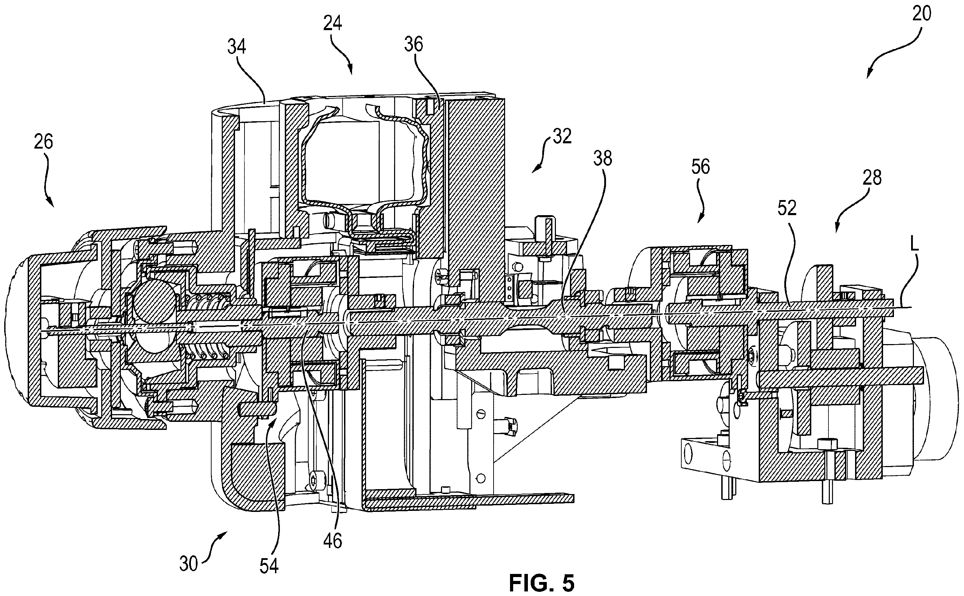

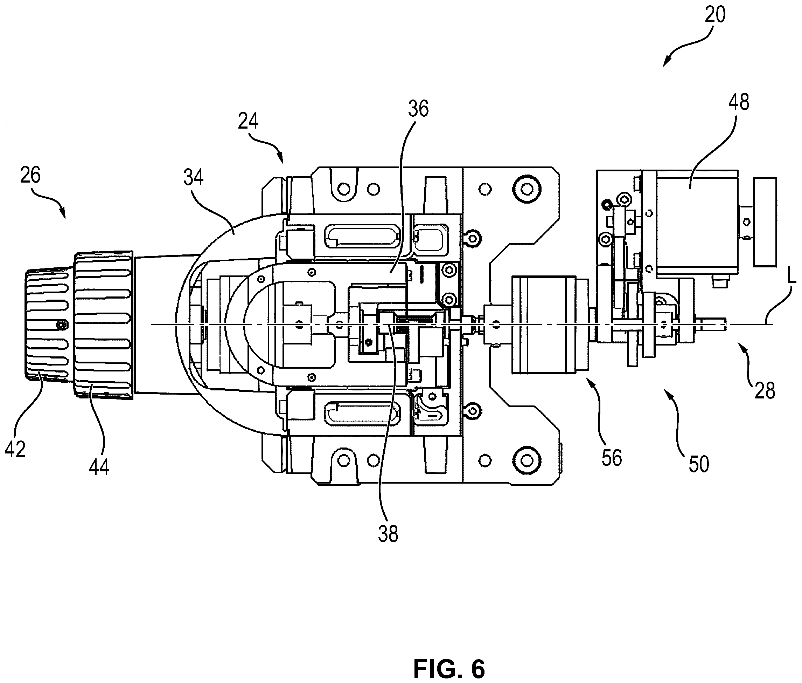

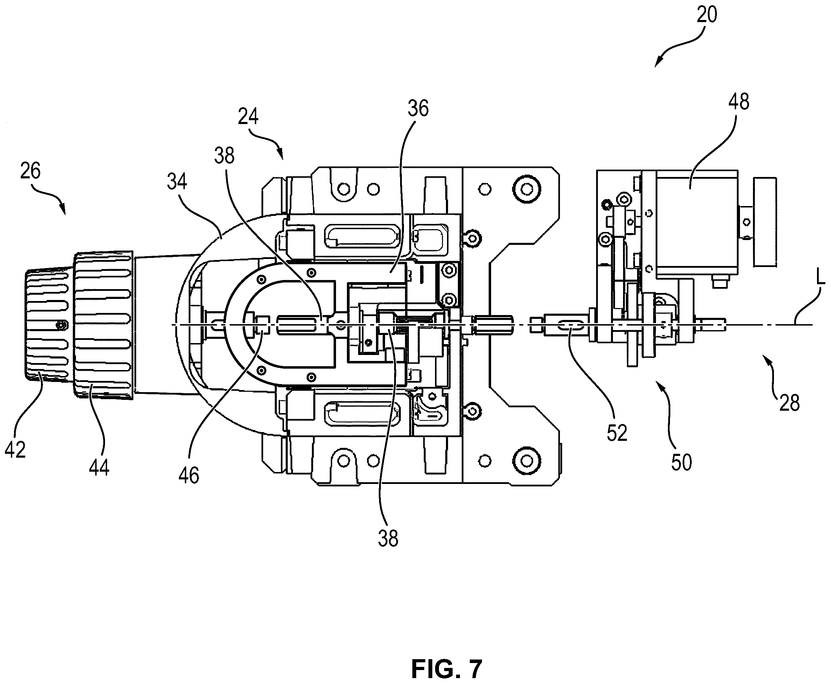

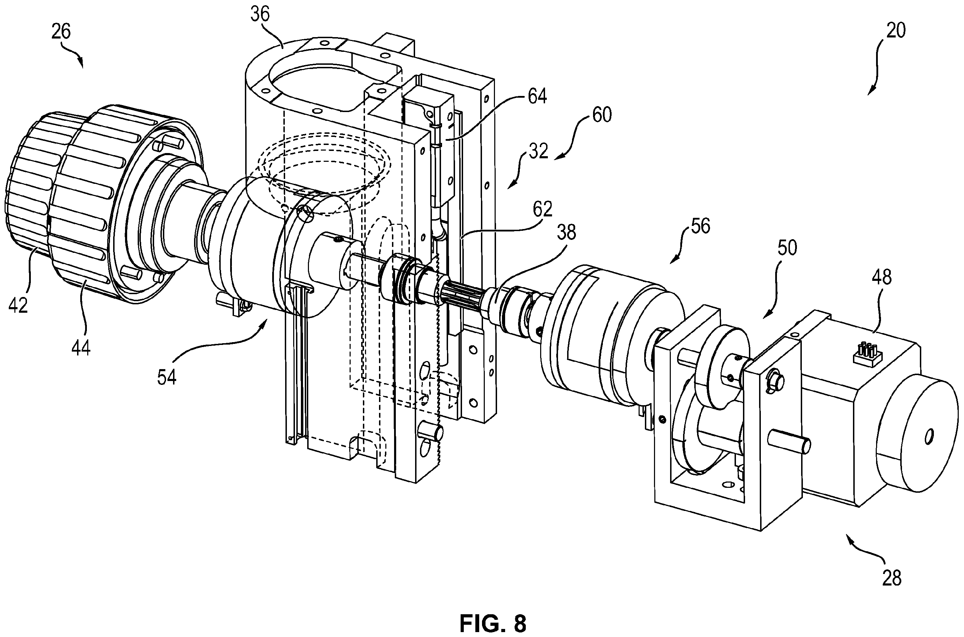

In each of Figures 2 to 8, illustrations of the adjusting mechanism 20 are shown, Figure 2 showing a schematic perspective general view, Figure 3 showing a perspective view with the housing being removed, Figure 4 showing a further perspective view, Figure 5 showing a sectional view, Figure 6 and Figure 7 both showing a top view and Figure 8 showing a schematic perspective illustration of a detail of the adjusting mechanism 20.

The adjusting mechanism 20 comprises an adjusting unit 24 by means of which the stage 18 can be moved. This adjusting unit 24 can optionally be driven by means of an operating unit 26 for a manual drive or by means of an electric drive unit 28.

The adjusting unit 24 has a stationary unit 30 which is immovable relative to the microscope base 22 and is firmly connected to the stand base body 12. Further, the adjusting unit 24 has a movable unit 32 which - similar to a slide - can be displaced relative to the stationary unit 30, wherein by means of this displacement the stage 18 which is fixed to this movable unit 32 at the upper side of the movable unit 32 in Figure 2 is moved.

The stationary unit 30 has a housing 34, which is omitted in Figure 3, so that the inner components and in particular the movable slide 36 of the movable unit 32 are visible.

The adjusting unit 24 has a stationary mounted drive shaft 38 (see e.g. Fig. 5) which, in the present example, is designed as a pinion shaft. This drive shaft 38 is coupled to the slide 36 via a rack and pinion mechanism 40 such that, when the drive shaft 38 is rotated, the slide 36 is moved dependent on the direction of rotation of the drive shaft 38 in the direction of the double arrow P1 so that the stage 18 is correspondingly height-adjusted.

The manual operating unit 26 comprises two knobs 42, 44, upon rotation of which a first output shaft 46 of the manual operating unit 26 is rotated. One of the two knobs 42, 44 serves as a fine drive, the other one as a coarse drive, wherein, given the same rotation, the shaft is rotated faster by the coarse drive as compared to the fine drive so that a quicker adjustment of the stage 18 is implemented. The coarse drive in particular serves to first move the stage 18 quickly into a position in which the object is roughly focused. An accurate positioning in the focal plane then takes place by means of the fine drive.

The electric drive unit 28 comprises a motor 48, in particular an electric motor, as well as a gear box 50 via which the motor 48 is coupled to the second output shaft 52. In an alternative embodiment of the invention, the motor 48 can also be directly coupled to the second output shaft 52.

As can be seen in Figures 5 and 7, the drive shaft 38 of the adjusting unit 24 and the two output shafts 46, 52 are arranged such that their longitudinal axes run on a straight line L. Further, it can be well taken from the Figures, that a gap is formed between the drive shaft 38 and the output shaft 46, as well as between drive shaft 38 and output shaft 52. Thus, the drive shaft 38 is not permanently coupled to said output shafts 36, 52.

Rather, the coupling between the drive shaft 38 and the first output shaft 46 of the manual operating unit 26 is established via a first coupling unit 54 designed as an electromagnetic clutch and the coupling between the drive shaft 38 and the second output shaft 52 of the electric drive unit 28 is established via a second coupling unit 56 that is likewise designed as an electromagnetic clutch.

The two electromagnetic clutches 54, 56 are in particular identically designed. In an alternative embodiment, both clutches 54, 56 may not be designed identically. Alternatively, it is likewise possible that other types of clutches than electromagnetic clutches are used.

The electromagnetic clutches 54, 56 shown in Figures 2 to 8 are so-called friction-plate clutches, in which each time one friction plate is connected in a rotationally fixed manner to the respective output shaft 46, 52 and the other friction plate is connected in a rotationally fixed manner to the drive shaft 38. When the respective clutch 54, 56 is deactivated, i.e. no current is applied, then there is a small gap between the friction plates so that when the respective output shaft 46, 52 is rotated no torque is transmitted to the drive shaft 38 and the drive shaft 38 is not rotated.

When, on the other hand, current is applied to the respective clutch 54, 56, then a magnet of the respective clutch 54, 56 causes that the two friction plates are pressed together so that, as a result of the friction, the torque of the respective output shaft 46, 52 can be transmitted to the drive shaft 38 and the drive shaft 38 is thus rotated as well.

The microscope 10 can be operated in two operating modes, namely a manual operating mode and a motorized operating mode. In the manual operating mode, the first clutch 54 is energized so that it is activated and a coupling is established between the first output shaft 46 and the drive shaft 38. The second clutch 56, on the other hand, is deactivated in this manual operating mode, i.e. is not energized, so that no torque is transmitted between the second output shaft 52 of the electric drive unit 28 and the drive shaft 38. Thus, in this manual operating mode the drive shaft 38 can only be driven by the manual operating unit 26 so that the stage 18 can be height-adjusted manually.

In the motorized operating mode, on the other hand, the second clutch 56 is activated, i.e. energized, so that a torque is transmitted from the second output shaft 52, and thus from the electric drive unit 28, to the drive shaft 38. The first clutch 54 is deactivated, i.e. not energized, so that no coupling exists between the first output shaft 46 of the manual operating unit 26 and the drive shaft 38. In this motorized operating mode, the stage 18 is thus adjusted by means of the electric drive unit 28.

In particular, a switching unit is provided by means of which a user can optionally switch between these two operating modes so that the user can always determine in an easy manner how the adjustment of the stage 18 is to take place.

In an alternative embodiment of the invention, also other types of electromagnetic clutches may be used. Alternatively, it is likewise possible that different types of clutches are used for the two clutches 54, 56.

Further, the adjusting mechanism 20 comprises a sensor unit 60 by means of which the respective current position of the stage 18 can be detected. The sensor unit 60 forms part of the adjusting unit 24 so that it works independently of the operating mode and independently of the manual operating unit 26 and the electric drive unit 28.

The sensor unit 60 in particular has a first sensor element 62 which is mounted to the slide 36 and is thus moved together with the stage 18. Further, the sensor unit has a second sensor element 64 which forms part of the stationary unit 30 of the adjusting unit 24 and is thus not moved together with the stage. The sensor unit 60 is designed such that at all times it can detect the relative position of the first and the second sensor element 62, 64 to each other, as a result whereof the position of the stage 18 can be determined as well. In this way, it is achieved that the position of the stage 18 can reliably be determined at any time, irrespective of how often and when the operating modes have been switched.

By means of the afore-described adjusting unit 20, it is in particular achieved that all advantages of a manual adjustment of a stage 18 and all advantages of a motorized adjustment of the stage 18 are combined in an easy manner and nevertheless a very simple structure is achieved. In particular, the manual and the motorized adjustment can be used completely independently of one another as a result of the complete decoupling of the unused unit via the electromagnetic clutches, without the one drive unit having any effect on the other.

The coarse drive of the manual mechanism in particular allows the user to drive the stage 18 very quickly to find the object, before switching to the fine drive mechanism to find the exact focus. In quick action, the user can also switch to the motorized operating mode via activating/deactivating the corresponding clutches 54, 56 to engage the motorized drive for more precise and accurate focusing.

Having a manual focus drive enables quick, intuitive sample positioning in the focal plane while driving the same axis with a motor enables accurate and repeatable focusing operation and automated focusing. Thus, the contrary requirements for speed and precision are balanced.

Moreover, the electromagnetic clutches 54, 56 serve an additional advantage to the main system by limiting the torque transmission to the drive shaft 38. When the applied torque exceeds the holding torque of the engaging clutch 54, 56, the clutch 54, 56 will slip to minimize wear and tear in the system due to improper handling. Therefore, damages to the system are prevented.

### List of reference signs

- 10: microscope
- 12: stand base body
- 14: pivot unit
- 16: housing
- 18: stage
- 20: adjusting mechanism
- 22: base
- 24: adjusting unit
- 26: manual operating unit
- 28: electric drive unit
- 30: stationary unit
- 32: movable unit
- 34: housing
- 36: slide
- 38: drive unit
- 40: rack and pinion mechanism
- 42,44: knob
- 46: first output shaft
- 48: motor
- 50: gear box
- 52: second output shaft
- 54, 56: clutch
- 60: sensor unit
- 62, 64: sensor element
- P1: direction
- L: Longitudinal axis

## Claims

1. A microscope, comprising
a movable stage (18) for holding objects to be microscoped,
an adjusting unit (24) for moving the stage (18) relative to a base (22) of the microscope (10) for focusing on the object, this adjusting unit (24) comprising a drive shaft (38) by the rotation of which the distance between the stage (18) and the base (22) is adjustable,
a manually operable operating unit (26) for manually moving the stage (18), the operating unit (26) comprising a manually drivable first output shaft (46), and
an electric drive unit (28) for the motorized movement of the stage (18), the electric drive unit (28) comprising a second output shaft (52),
wherein in a motorized operating mode the second output shaft (52) is coupled to the drive shaft (38) via a second coupling unit (56), and
wherein in a manual operating mode, the drive shaft (38) is not coupled to the second output shaft (52) via the second coupling unit (56)
**characterized in that**
in the manual operating mode the first output shaft (46) is coupled to the drive shaft (38) via a first coupling unit (54), and
in the motorized operating mode the drive shaft (38) is not coupled to the first output shaft (46) via the first coupling unit (54).

2. The microscope (10) according to claim 1, **characterized in that** the first coupling unit (54) and/or the second coupling unit (56) are each designed as electromagnetic clutches.

3. The microscope (10) according to claim 2, **characterized in that** the first coupling unit (54) and/or the second coupling unit (56) are each designed as electromagnetic friction-plate clutches.

4. The microscope (10) according to claim 2, **characterized in that** in the manual operating mode only the first coupling unit (54) of the two coupling units (54, 56) is energized, and **in that** in the motorized operating mode only the second coupling unit (56) of the two coupling units (54, 56) is energized.

5. The microscope (10) according to one of the preceding claims, **characterized in that** the operating unit (24) comprises at least one knob (42, 44) for rotating the first output shaft (46).

6. The microscope (10) according to claim 5, **characterized in that** the operating unit (24) has a first knob for a coarse adjustment of the stage (18) and a second knob for a fine adjustment of the stage (18).

7. The microscope (10) according to one of the preceding claims, **characterized in that** the drive shaft (38) is designed as a pinion shaft.

8. The microscope (10) according to one of the preceding claims, **characterized in that** the drive shaft (38) forms part of a stationary unit (30) of the adjusting unit (24), and **in that** the adjusting unit (24) comprises a rack and pinion mechanism (40), drivable by the drive shaft (38), for moving the stage (18) relative to the stationary unit (30).

9. The microscope (10) according to one of the preceding claims, **characterized in that** a sensor unit (60) for determining the position of the stage (18) is provided.

10. The microscope (10) according to claim 9, **characterized in that** the sensor unit (60) operates independently of the operating unit (26) and independently of the electric drive unit (28), in particular that neither the position of components of the operating unit (26) nor of components of the electric drive unit (28) is detected by the sensor unit (60).

11. The microscope (10) according to claim 9 or 10, **characterized in that** the sensor unit (60) comprises a first sensor element (62) moved together with the stage (18) and a second sensor element (64) which forms part of the stationary unit (30) of the adjusting unit (24), and that the sensor unit (60) detects the position of the first and second sensor element (62, 64) relative to each other.

12. The microscope (10) according to one of the preceding claims, **characterized in that** a manually operable switching unit for switching between the manual operating mode and the motorized operating mode is provided.

13. The microscope (10) according to claim 12, **characterized in that** the switching unit is designed such that at all times only either the first coupling unit (54) or the second coupling unit (56) is activated.

14. The microscope (10) according to one of the preceding claims, **characterized in that** in a self-locking mode for holding the stage in a predetermined position, the stage is coupled via the first coupling unit (54) to the manual operating unit (26) and/or via the second coupling unit (56) to the electric drive unit (28).

## Patentansprüche

1. Mikroskop, umfassend:
einen beweglichen Tisch (18) zum Halten von zu mikroskopierenden Objekten,
eine Einstelleinheit (24) zum Bewegen des Tisches (18) bezogen auf eine Basis (22) des Mikroskops (10) zum Fokussieren auf das Objekt, wobei die Einstelleinheit (24) eine Antriebswelle (38) umfasst, durch deren Drehung der Abstand zwischen dem Tisch (18) und der Basis (22) einstellbar ist,
eine manuell bedienbare Bedieneinheit (26) zum manuellen Bewegen des Tisches (18), wobei die Bedieneinheit (26) eine manuell antreibbare erste Ausgangswelle (46) umfasst, und
eine elektrische Antriebseinheit (28) zur motorisierten Bewegung des Tisches (18), wobei die elektrische Antriebseinheit (28) eine zweite Ausgangswelle (52) umfasst,
wobei in einem motorisierten Betriebsmodus die zweite Ausgangswelle (52) über eine zweite Kopplungseinheit (56) mit der Antriebswelle (38) gekoppelt ist, und wobei in einem manuellen Betriebsmodus die Antriebswelle (38) nicht über die zweite Kopplungseinheit (56) mit der zweiten Ausgangswelle (52) gekoppelt ist,
**dadurch gekennzeichnet, dass**
in dem manuellen Betriebsmodus die erste Ausgangswelle (46) über eine erste Kopplungseinheit (54) mit der Antriebswelle (38) gekoppelt ist, und
in dem motorisierten Betriebsmodus die Antriebswelle (38) nicht über die erste Ausgangswelle (46) mit der ersten Kopplungseinheit (54) gekoppelt ist.

2. Mikroskop (10) nach Anspruch 1, **dadurch gekennzeichnet, dass** die erste Kopplungseinheit (54) und/oder die zweite Kopplungseinheit (56) jeweils als elektromagnetische Kupplung gestaltet sind.

3. Mikroskop (10) nach Anspruch 2, **dadurch gekennzeichnet, dass** die erste Kopplungseinheit (54) und/oder die zweite Kopplungseinheit (56) jeweils als elektromagnetische Reibscheibenkupplung gestaltet sind.

4. Mikroskop (10) nach Anspruch 2, **dadurch gekennzeichnet, dass** in dem manuellen Betriebsmodus nur die erste Kopplungseinheit (54) der zwei Kopplungseinheiten (54, 56) mit Energie versorgt wird, und dadurch, dass in dem motorisierten Betriebsmodus nur die zweite Kopplungseinheit (56) der zwei Kopplungseinheiten (54, 56) mit Energie versorgt wird.

5. Mikroskop (10) nach einem der vorhergehenden Ansprüche, **dadurch gekennzeichnet, dass** die Bedieneinheit (24) mindestens einen Knopf (42, 44) zum Drehen der ersten Ausgangswelle (46) umfasst.

6. Mikroskop (10) nach Anspruch 5, **dadurch gekennzeichnet, dass** die Bedieneinheit (24) einen ersten Knopf für eine Grobeinstellung des Tisches (18) und einen zweiten Knopf für eine Feineinstellung des Tisches (18) aufweist.

7. Mikroskop (10) nach einem der vorhergehenden Ansprüche, **dadurch gekennzeichnet, dass** die Antriebswelle (38) als eine Ritzelwelle gestaltet ist.

8. Mikroskop (10) nach einem der vorhergehenden Ansprüche, **dadurch gekennzeichnet, dass** die Antriebswelle (38) Teil einer stationären Einheit (30) der Einstelleinheit (24) ist, und dadurch, dass die Einstelleinheit (24) einen Zahnstangen-Ritzel-Mechanismus (40), der durch die Antriebswelle (38) antreibbar ist, zum Bewegen des Tisches (18) bezogen auf die stationäre Einheit (30) umfasst.

9. Mikroskop (10) nach einem der vorhergehenden Ansprüche, **dadurch gekennzeichnet, dass** eine Sensoreinheit (60) zum Bestimmen der Position des Tisches (18) bereitgestellt ist.

10. Mikroskop (10) nach Anspruch 9, **dadurch gekennzeichnet, dass** die Sensoreinheit (60) unabhängig von der Bedieneinheit (26) und unabhängig von der elektrischen Antriebseinheit (28) arbeitet, dass insbesondere weder die Position der Komponenten der Bedieneinheit (26) noch der Komponenten der elektrischen Antriebseinheit (28) von der Sensoreinheit (60) erfasst werden.

11. Mikroskop (10) nach Anspruch 9 oder 10, **dadurch gekennzeichnet, dass** die Sensoreinheit (60) ein erstes Sensorelement (62) umfasst, das zusammen mit dem Tisch (18) bewegt wird, und ein zweites Sensorelement (64), das Teil der stationären Einheit (30) der Einstelleinheit (24) ist, und dadurch, dass die Sensoreinheit (60) die Position des ersten und des zweiten Sensorelements (62, 64) bezogen aufeinander erfasst.

12. Mikroskop (10) nach einem der vorhergehenden Ansprüche, **dadurch gekennzeichnet, dass** eine manuell bedienbare Schalteinheit zum Schalten zwischen dem manuellen Betriebsmodus und dem motorisierten Betriebsmodus bereitgestellt ist.

13. Mikroskop (10) nach Anspruch 12, **dadurch gekennzeichnet, dass** die Schalteinheit derart gestaltet ist, dass zu jeder Zeit nur entweder die erste Kopplungseinheit (54) oder die zweite Kopplungseinheit (56) aktiviert ist.

14. Mikroskop (10) nach einem der vorhergehenden Ansprüche, **dadurch gekennzeichnet, dass** in einem Selbstsperrmodus zum Halten des Tisches in einer vorbestimmten Position der Tisch über die erste Kopplungseinheit (54) mit der manuellen Bedieneinheit (26) und/oder über die zweite Kopplungseinheit (56) mit der elektrischen Antriebseinheit (28) gekoppelt ist.

## Revendications

1. Microscope, comprenant
un étage mobile (18) pour tenir des objets à observer au microscope,
une unité de réglage (24) pour déplacer l'étage (18) par rapport à une base (22) du microscope (10) pour une mise au point sur l'objet, cette unité de réglage (24) comprenant un arbre d'entraînement (38) par la rotation duquel la distance entre l'étage (18) et la base (22) est réglable,
une unité de fonctionnement à actionnement manuel (26) pour déplacer manuellement l'étage (18), l'unité de fonctionnement (26) comprenant un premier arbre de sortie à entraînement manuel (46), et
une unité d'entraînement électrique (28) pour le mouvement motorisé de l'étage (18), l'unité d'entraînement électrique (28) comprenant un second arbre de sortie (52),
dans lequel, dans un mode de fonctionnement motorisé, le second arbre de sortie (52) est accouplé à l'arbre d'entraînement (38) par le biais d'une seconde unité d'accouplement (56), et
dans lequel, dans un mode de fonctionnement manuel, l'arbre d'entraînement (38) n'est pas accouplé au second arbre de sortie (52) par le biais de la seconde unité d'accouplement (56)
**caractérisé en ce que**
dans le mode de fonctionnement manuel, le premier arbre de sortie (46) est accouplé à l'arbre d'entraînement (38) par le biais d'une première unité d'accouplement (54), et
dans le mode de fonctionnement motorisé, l'arbre d'entraînement (38) n'est pas accouplé au premier arbre de sortie (46) par le biais de la première unité d'accouplement (54).

2. Microscope (10) selon la revendication 1, **caractérisé en ce que** la première unité d'accouplement (54) et/ou la seconde unité d'accouplement (56) sont chacune conçues en tant qu'embrayages électromagnétiques.

3. Microscope (10) selon la revendication 2, **caractérisé en ce que** la première unité d'accouplement (54) et/ou la seconde unité d'accouplement (56) sont chacune conçues en tant qu'embrayages électromagnétiques à friction.

4. Microscope (10) selon la revendication 2, **caractérisé en ce que**, dans le mode de fonctionnement manuel, seule la première unité d'accouplement (54) des deux unités d'accouplement (54, 56) est excitée, et **en ce que**, dans le mode de fonctionnement motorisé, seule la seconde unité d'accouplement (56) des deux unités d'accouplement (54, 56) est excitée.

5. Microscope (10) selon l'une des revendications précédentes, **caractérisé en ce que** l'unité de fonctionnement (24) comprend au moins un bouton (42, 44) pour faire tourner le premier arbre de sortie (46).

6. Microscope (10) selon la revendication 5, **caractérisé en ce que** l'unité de fonctionnement (24) possède un premier bouton pour un réglage grossier de l'étage (18) et un second bouton pour un réglage fin de l'étage (18).

7. Microscope (10) selon l'une des revendications précédentes, **caractérisé en ce que** l'arbre d'entraînement (38) est conçu en tant qu'arbre de pignon.

8. Microscope (10) selon l'une des revendications précédentes, **caractérisé en ce que** l'arbre d'entraînement (38) fait partie d'une unité fixe (30) de l'unité de réglage (24), et **en ce que** l'unité de réglage (24) comprend un mécanisme à pignon et crémaillère (40), pouvant être entraîné par l'arbre d'entraînement (38), pour déplacer l'étage (18) par rapport à l'unité fixe (30).

9. Microscope (10) selon l'une des revendications précédentes, **caractérisé en ce qu'**une unité de capteur (60) permettant de déterminer la position de l'étage (18) est prévue.

10. Microscope (10) selon la revendication 9, **caractérisé en ce que** l'unité de capteur (60) fonctionne indépendamment de l'unité de fonctionnement (26) et indépendamment de l'unité d'entraînement électrique (28), en particulier **en ce que** ni la position de composants de l'unité de fonctionnement (26) ni celle de composants de l'unité d'entraînement électrique (28) ne sont détectées par l'unité de capteur (60).

11. Microscope (10) selon la revendication 9 ou 10, **caractérisé en ce que** l'unité de capteur (60) comprend un premier élément de capteur (62) déplacé conjointement avec l'étage (18) et un second élément de capteur (64) qui fait partie de l'unité fixe (30) de l'unité de réglage (24), et **en ce que** l'unité de capteur (60) détecte la position des premier et second éléments de capteur (62, 64) l'un par rapport à l'autre.

12. Microscope (10) selon l'une des revendications précédentes, **caractérisé en ce qu'**une unité de commutation à actionnement manuel permettant une commutation entre le mode de fonctionnement manuel et le mode de fonctionnement motorisé est prévue.

13. Microscope (10) selon la revendication 12, **caractérisé en ce que** l'unité de commutation est conçue de sorte que, à tout moment, l'une ou l'autre seulement de la première unité d'accouplement (54) et de la seconde unité d'accouplement (56) soit activée.

14. Microscope (10) selon l'une des revendications précédentes, **caractérisé en ce que**, dans un mode d'autoverrouillage pour tenir l'étage dans une position prédéfinie, l'étage est accouplé par l'intermédiaire de la première unité d'accouplement (54) à l'unité de fonctionnement manuel (26) et/ou par le biais de la seconde unité d'accouplement (56) à l'unité d'entraînement électrique (28).
